(19) Europäisches Patentamt
European Patent Office
Office européen des brevets

(11) EP 0 603 939 B1

(12) EUROPEAN PATENT SPECIFICATION

(45) Date of publication and mention of the grant of the patent:
**16.06.1999 Bulletin 1999/24**

(51) Int Cl.[6]: **C08G 61/02**, C08G 61/12, H01B 1/12, H01L 21/02

(21) Application number: **93203503.3**

(22) Date of filing: **14.12.1993**

(54) **N-type conductive polymer and method of preparing such a polymer**

Leitfähiges N-Typ-Polymer und Methode zur Herstellung desselben

Polymère conducteur de type N et méthode de préparation d'un tel polymère

(84) Designated Contracting States:
**BE CH DE FR GB IT LI NL**

(30) Priority: **21.12.1992 EP 92204038**

(43) Date of publication of application:
**29.06.1994 Bulletin 1994/26**

(73) Proprietor: **Koninklijke Philips Electronics N.V.**
**5621 BA Eindhoven (NL)**

(72) Inventors:
- **De Leeuw, Dagobert Michel**
  **NL-5656 AA Eindhoven (NL)**
- **Havinga, Edsko Enno**
  **NL-5656 AA Eindhoven (NL)**
- **Alberts, Albert Henderikus**
  **NL-5656 AA Eindhoven (NL)**
- **Meekes, Gabrielle Johanna Bernarda Maria**
  **NL-5656 AA Eindhoven (NL)**
- **Tol, Arie Jan Willem**
  **NL-5656 AA Eindhoven (NL)**

(74) Representative: **Stolk, Steven Adolph et al**
**INTERNATIONAAL OCTROOIBUREAU B.V.,**
**Prof. Holstlaan 6**
**5656 AA Eindhoven (NL)**

(56) References cited:
**EP-A- 0 133 109** **US-H- H 183**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to an n-type conductive polymer comprising a poly-conjugated chain of negatively charged active units as well as positively charged counterions.

The invention also relates to a method of preparing such an n-type conductive polymer.

The invention further relates to the use of such polymers.

In general, organic polymers are electrical insulators and are therefore used as insulating material in electrical and electronic components. It is known that a polymer having a poly-conjugated bond system comprising a chain of, for example, double bonds, triple bonds, aromatic or hetero-aromatic rings, said polymer obtains electrically conductive properties. Said conductivity is termed intrinsic conductivity. Examples of such polymers are: polyacetylene, polythiophene and polypyrrole. In general, the conductivity of said polymers is small because they are semiconductors with a relatively large band gap of 1.5-4 eV. The conductivity can be increased by (electro-)chemically oxidizing or reducing the polymer. Said oxidation or reduction treatment is referred to as doping. Oxidation results in the formation of p-type conductors; reduction results in the formation of n-type conductors. Dopants which are suitable for obtaining p-type conduction are, for example, $I_2$, $AsF_5$, $SbF_5$, $HBF_4$, perchlorate, sulphonate, $SO_3$ and $FeCl_3$. Dopants which are suitable for obtaining n-type conduction are, for example, butyl lithium and biphenyl sodium. The oxidation or reduction treatment results in the formation of charge carriers on the polymer chains, said charges being compensated by oppositely charged counterions. In general, polymers are cheap and can be processed in a simple manner, so that it is attractive to use conductive polymers in conductive and semiconductive structures in (integrated) electronic circuits, electrodes for batteries, antistatic coatings and electromagnetic protective layers. The application of conductive polymers in Schottky diodes, p-(i)-n diodes, light-emitting diodes and transistors requires the use of stable p- and n-type conductive polymers.

The stability of doped polymers with respect to the environment is governed by both the polymer and the counterion. Known stable, p-type conductive polymers are based on polythiophene and polypyrrole. Known n-type, conductive polymers, which are chemically doped, are based on polyacetylene and polyparaphenylene. However, said n-type conductive polymers are very unstable, in particular in moist air. Due to said instability they are unsuitable for use in a number of different applications. An n-type conductive polymer on the basis of polyparaphenylene is known from European Patent Application EP-A-254609. According to the method described therein, polyparaphenylene is rendered n-type conductive by bombarding it with high-energy $K^+$ ions (ion implantation). In accordance with this method, an n-type conductive polymer is obtained which is more stable than chemically-doped polymers.

A disadvantage of the known, chemically-doped n-type conductive polymers is the above-mentioned instability. A disadvantage of the known method of doping by ion implantation is that it requires the use of expensive high-vacuum equipment.

It is an object of the invention to provide, *inter alia,* an n-type conductive polymer which is stable with respect to moist air.

The invention also aims at providing a simple method of preparing such n-type conductive polymers.

According to the invention, this object is achieved by a polymer as described in the opening paragraph, which is characterized in that the active units comprise at least one electron-accepting substituent which is selected from the group consisting of the substituents $-O^-$, $-S^-$ and the substituents represented by formulas II and III of Fig. 1, and in that the active units alternate with neutral connecting units in the chains. The term active unit is to be understood to mean herein the unit in the polymer chain on which the negative charge is concentrated. An example of such an n-type conductive polymer is shown in formula I of Fig. 1. The active unit in polymer (I) is the bisphenolate anion. The active units are separated from each other by neutral connecting units Z. A suitable connecting unit is, for example, the ethylene group -CH = CH-, as shown in the polymers of formulas XIX and XX in Fig. 4. The counterion which compensates the negative charge on the polymer chain is, for example, the $K^+$ ion. The degree of polymerization n is, for example, 10-100. The electrical conductivity of this polymer, measured on a film, is $8.10^{-6}$ S/cm and is of the n-type. The stability of this polymer is demonstrated by the small decrease in conductivity to $2.10^{-6}$ S/cm at a residence time of 7 days in moist air. The negative charge of the polymer is concentrated on the oxygen ions, but is not completely localized.

The active unit of polymer (I) is formed by the reduced form of benzoquinone. For the active unit use can alternatively be made of other reduced quinone units, such as the units of naphtaquinone and anthraquinone. These and other suitable active units are shown in formulas IV-IX of Fig. 2. In said formulas, R, $R_1$ and $R_2$ represent a H atom, a $C_1$-$C_{18}$ alkyl group, a $C_1$-$C_{18}$ alkoxy group, a $C_1$-$C_{18}$ thioalkoxy group or an aryl group or a combination of these groups, which groups may or may not be branched, and R' represents an $-O^-$ group or R. Substitution with elongated groups leads to a better solubility and processability of the polymer. The units represented by formulas VII and VIII are based on quadratic acid and croconic acid, respectively.

Analogous n-type conductive polymers can be prepared, in which the $-O^-$ group is replaced by the $-S^-$ group or by a negatively charged dicyanomethylene group or cyanoimide group as represented by formulas II and III, respectively,

in Fig. 1. The -O⁻ and -S⁻ group and the groups of formulas II and III share the characteristic that they are strong electron acceptors.

The neutral connecting units in the conductive polymer and the active units ensure that a poly-conjugated system is obtained. Apart from the above-mentioned ethylene group, other neutral units, as shown in the formulas X-XVIII of Fig. 3, can alternatively be used. In said formulas, n is at least equal to 1. An example of a suitable neutral unit is terthienyl which consists of three thiophene units (formula XVI in which n = 3). It is also possible to incorporate a combination of said neutral units into a polymer chain, an example of which is represented by formula XVIII and another example of which is a vinylene-phenylene unit. For the counterions, preferably, use is made of univalent alkali ions, such as the ions $Li^+$, $Na^+$, $K^+$, $Cs^+$, $NH_4^+$ or quaternary organic $N^+$ ions such as the quaternary ammonium ion $(R_1 R_2 R_3 R_4)N^+$, where $R_1$, $R_2$, $R_3$ and $R_4$ represent a H atom or, for example, a cyclic $C_1$-$C_{18}$ alkyl group which may or may not be branched or may be cyclic. It has been found that the conductivity increases with the magnitude of the counterion; therefore, the $Cs^+$ ion is very suitable. Due to the effect of the increase in conductivity, the counterion is preferably complexed with a large ligand, such as a crown ether or a cryptand. A suitable crown ether is 18-crown-6; a suitable cryptand is 2,2,2-Kryptofix™ (supplier Merck).

In a very suitable embodiment of the invention, the active unit in the n-type conductive polymer is a monophenolate anion. Formula XX of Fig. 4 shows a repeating unit of such a polymer. The incorporation of monophenolate units provides the polymers with an oxidation stability which is even better than that of polymers having bisphenolate units, as represented by formula XIX in Fig. 4. This can be attributed to the fact that the use of monophenolate units, unlike bisphenolate units, renders oxidation to the corresponding quinone structure impossible. The group R in formula XX represents a H atom, a $C_1$-$C_{18}$ alkyl group, a $C_2$-$C_{18}$ alkoxy group, a $C_1$-$C_{18}$ thioalkoxy group or an aryl group or a combination of these groups, which groups may or may not be branched. Alternatively, the above-mentioned reduced quinone units represented by formulas IV, V and VI in Fig. 2 can be used instead of monophenolate units, provided that each unit contains only one -O⁻ group.

The object of providing a method of preparing an n-type conductive polymer is achieved according to the invention by a method which is characterized in that a polymeric compound comprising dialkoxyphenylene units is treated with a dealkylation agent, causing the dialkoxyphenylene units to be converted into the corresponding dihydroxyphenylene units, after which the dihydroxyphenylene units are converted into bisphenolate anion units by means of a strong base, said bisphenolate anion units forming the active units of the n-type conductive polymer. The reaction scheme of an example is shown in Fig. 5. Poly(dimethoxy paraphenylene methoxyvinylene) (formula XXI in Fig. 5) is demethylated by means of $BBr_3$, thereby forming the corresponding dihydroxy compound XXII. By subjecting the hydroxy groups to a treatment with a strong base, they are deprotonated and the n-type conductive polymer XXIII is obtained, the counterion being the cation originating from the strong base. If, for example, KOH is used as the strong base, the $K^+$ ion serves as the counterion. Other suitable bases are LiOH, NaOH, CsOH, $NH_4OH$ and the above-mentioned quaternary $N^+$ ions.

It is alternatively possible to use $(CH_3)_3SiI$ and HI as the demethylation agent. N-type conductive polymers containing the units represented by formulas IV, V or VI of Fig. 2 as the active unit can be analogously prepared by using the corresponding dialkoxy compounds as the starting compounds.

A method of preparing an n-type conductive polymer having a monophenolate anion as the active unit is characterized in that a polymeric compound comprising monomethoxyphenylene units is demethylated with Li diphenylphosphide or K diphenylphosphide, causing the monomethoxyphenylene units to be converted into the corresponding monohydroxyphenylene units, after which the monohydroxyphenylene units are converted into monophenolate anion units by means of a strong base, said monophenolate anion units forming the active units of the n-type conductive polymer. The reaction scheme of an example is shown in Fig. 6. The polymer compound of formula XXIV contains only one methoxy group per phenylene unit. The substituent R in formula XXIV represents a H-atom, a $C_1$-$C_{18}$ alkyl group, a $C_2$-$C_{18}$ alkoxy group, a $C_1$-$C_{18}$ thioalkoxy group or an aryl group, which groups may or may not be branched. It has been found that an alkoxy group having at least 2 C-atoms (*i.e.* an ethoxy group, a propoxy group, *etc.*) is not demethylated into a hydroxy group, so that the intermediate product XXV contains only one hydroxy group per phenylene unit. After a treatment with one of the above-mentioned strong bases, the corresponding monophenolate anion is formed as the active unit in the polymer chain (formula XXVI in Fig. 6). N-type conductive polymers having the units of formulas IV, V or VI, which contain only one -O⁻ group, as the active unit can be prepared in an analogous method by using the corresponding monoalkoxy compounds as the starting compounds.

Another method of preparing a stable n-type conductive polymer in accordance with the invention is characterized in that a polymeric compound comprising 1,2- or 1,3-diketones and aryl units is treated with a solution of a salt of a 1-, 2- or 3-valent metal, thereby forming the n-type conductive polymer, the salt used originating from a weaker acid than diketone. Formula XXVII in Fig. 7 represents a suitable polymeric 1,3-diketone compound in which Ar is a phenylene group, a substituted phenylene group, a naphtylene group, an anthrylene group or a thienylene group. In this formula, R represents a H atom or a $C_1$-$C_{18}$ alkyl group. n is equal to, for example, 10-100. After treating this polymeric diketone with a solution of a salt containing a 1-, 2- or 3-valent metal ion $M^{z+}$, where z = 1, 2 or 3, an n-type

conductive polymer XXVIII is obtained which is stable in moist air. Suitable examples of 1-valent metal ions are $Li^+$ and $Na^+$. Suitable examples of 2- and 3-valent metals are $Cu^{2+}$, $Ni^{2+}$ and $Al^{3+}$, $Ti^{3+}$, respectively . The salt used must originate from a weaker acid than diketone, for example an acetate. Of course, hydroxides of said metal ions can also suitably be used, provided that they are soluble. The salts of acids which are stronger than diketones, such as chlorides and perchlorates, are unsuitable. Preferably, the metal ion in the solution is complexed with the above-mentioned crown ethers or cryptands. An analogous method can be carried out, in which polymeric 1,2-diketones are used as the starting substance.

By virtue of the availability of both stable p-type and n-type semiconductive polymers, for example Schottky diodes, p-(i)-n diodes, light-emitting diodes and transistors can be manufactured.

The invention will be explained by means of exemplary embodiments and with reference to the accompanying drawings, in which

Fig. 1 shows formula I of an n-type conductive polymer in accordance with the invention, comprising the bisphenolate anion as the active unit, and several other electron-accepting substituents II and III,
Fig. 2 shows the formulas of several active units IV-IX of n-type conductive polymers in accordance with the invention,
Fig. 3 shows the formulas of several neutral units X-XVIII of n-type conductive polymers in accordance with the invention,
Fig. 4 shows formula XIX of a repeating unit with a bisphenolate anion and formula XX of a repeating unit with a monophenolate anion of an n-type conductive polymer in accordance with the invention,
Fig. 5 shows the reaction scheme of the preparation of an n-type conductive polymer XXIII in accordance with the invention, having a bisphenolate anion as the active unit,
Fig. 6 shows the reaction scheme of the preparation of an n-type conductive polymer XXVI in accordance with the invention, having a monophenolate anion as the active unit,
Fig. 7 shows the reaction scheme of the preparation of an n-type conductive polymer XXVIII in accordance with the invention, using a polymeric 1,3-diketone compound as the starting compound,
Fig. 8 shows the structural formula XXIX of a $K^+$ ion which is complexed with the crown ether 18-crown-6,
Fig. 9 shows the structural formula XXX of an n-type conductive polymer in accordance with the invention, and
Fig. 10 shows the reaction scheme of the preparation of another n-type conductive polymer XXXIII in accordance with the invention.

<u>Exemplary embodiment 1.</u>

<u>Preparation of the n-type conductive polymer XXIII.</u>

Using a 2 wt.% solution in chloroform of poly(dimethoxy paraphenylene methoxyvinylene) (supplier LARK Enterprise, Webster, MA, USA), as represented by formula XXI in Fig. 5 (n above 50), a 1 µm thick film of this polymer is provided on a glass substrate by spin coating. The polymer film is treated at room temperature with a solution of 1 mol/l $BBr_3$ in methylene chloride. The polymer compound XXII (Fig. 5) having dihydroxyphenylene units is then formed by demethylation. After immersing the polymer film in a solution of 1 mol/l KOH in water, the hydroxy groups are deprotonated and the polymer XXIII (Fig. 5) having bisphenolate anions as the active units is formed. The polymer XXIII having the $K^+$ ion as the counterion is n-type conductive and has a conductivity of $8.10^{-6}$ S/cm, measured on the polymer film. In moist air, the polymer remains stable for several days, which is amply sufficient for most applications. The conductivity depends on the base used. The use of a solution of 1 mol/l KOH in methanol to which an equivalent quantity of the crown ether 18-crown-6 is added, results in a conductivity of $10^{-4}$ S/cm. The $K^+$ ion is complexed with said crown ether (formula XXIX in Fig. 8). For the demethylation reaction, a solution of 1 wt.% $(CH_3)_3$ SiI in chloroform or a solution of 1 wt.% HI in methanol can be used instead of $BBr_3$.

<u>Exemplary embodiment 2.</u>

<u>Preparation of the n-type conductive polymer XXVI.</u>

A quantity of 356 mg (1 mmol) 1,4-bischloromethyl, 2-methoxy, 5-dodecyloxy benzene (supplied by Syncom B.V.) is dissolved in 35 ml tetrahydrofuran (degassed, dried by distillation from sodium hydride under nitrogen) under a nitrogen atmosphere. At room temperature, 2.2 mmol potassium t-butoxide is introduced as a solid in one portion. The mixture is stirred efficiently and becomes homogeneous after 10-15 minutes. Stirring is continued for at least 1 hour, after which an orange fluorescent gel-like solution is obtained, consisting of 80-85 % of poly(2-methoxy, 5-dodecyloxy vinylene phenylene) in accordance with formula XXIV, where R = $C_{12}H_{25}O$ (Fig. 6), as indicated by H-NMR

spectroscopy (80 MHz). n amounts to about 10. A solution of lithium diphenyl phosphide in dry tetrahydrofuran, prepared from 1 mmol diphenylphosphine and 1 mmol n-butyllithium, is introduced in one portion and the mixture is stirred for 2-3 days at room temperature under a nitrogen atmosphere. After this period the solution assumes a fluorescent yellow colour. The solution is poured into 150 ml ethanol containing 1 ml concentrated hydrochloric acid, while stirring efficiently. After 1 hour, the bulk of the solvents is removed by using a rotary evaporator which operates at 20-22 mbar and 100 ml demineralised water is added. The polymeric products and methyl diphenyl phosphine are extracted with two portions of methylene chloride and the combined extracts are evaporated to dryness. The yellow syrup obtained is purified by reprecipitation from methylene chloride and pentane until an amorphous yellow solid is obtained, which is fluorescent green-yellow when it is irradiated with UV-light. After heating at 160°C for 3 hours under a 0.02 mbar dynamic vacuum, the product is identified as poly(2-hydroxy, 5-dodecyloxy vinylenephenylene) in accordance with formula XXV, where R = $C_{12}H_{25}O$ (Fig. 6), by H-NMR spectroscopy in a $CDCl_3$ solution. This polymer XXV is soluble *inter alia* in benzene, chlorocarbon solvents, tetrahydrofuran, methanol and ethanol. Sodium hydride, 1.6 mmol as a 80% dispersion in mineral oil, is stirred into a solution of 1 mmol of polymer XXV (Fig. 6) and 1 mmol 2,2,2-Kryptofix™ (supplier Merck) in dry toluene under a nitrogen atmosphere at room temperature. After the hydrogen evolution of the darkened mixture has abated (5-10 minutes), the excess sodium hydride is removed by filtration under nitrogen. The green homogeneous filtrate is evaporated to dryness and washed with two portions of pentane to remove mineral oil and traces of uncomplexed Kryptofix. The residue is identified as the 2,2,2-Kryptofix complexed sodium salt of polymer XXVI (Fig. 6) by H-NMR spectroscopy in $CDCl_3$. Thin films of this reddish brown material are cast from a chlorocarbon solution and are found to have a specific n-type conductivity of $10^{-7}$ S/cm, which remains unchanged after heating at 150°C for 5 hours and standing at least 3 weeks at room temperature in an ambient atmosphere.
The conductivity of polymer XXVI (Fig. 6) having $K^+$ as the counterion which is complexed with 18-crown-6 amounts to $10^{-5}$ S/cm.

Exemplary embodiment 3.

Preparation of the n-type conductive polymer XXVIII.

In an article by S.A. Fuqaa et. al. in J. Org. Chem., Vol. 29 (1964), pages 395-398, the preparation of 1,3-bis (p-bromophenyl)-propane-1,3-dione is described. A quantity of 600 mg of this dione monomer is heated with 1 g 1,3-trans-ethenediyl-bis-(tributyl)tin in dry dimethylformamide and 40 mg tetrakis(triphenylphophine)palladium(0) in a nitrogen atmosphere at 120°C for 4-5 hours. Subsequently, a green precipitate is formed from the initially homogeneous reaction mixture. It is collected on a glass frit, washed with ethanol and dried in vacuum. It is identified as polymeric 1,3-diketone XXVII (Fig. 7) where Ar = phenylene, R = H and n = 10-20. Polymer XXVII is stirred with an excess of Cu (II)acetate in a 50/50 mixture of water/methanol for 3 days at ambient temperature. After filtration and washing with the solvent mixture, the copper(II) complex is obtained as a dark green solid which is stable in air. The solid is identified as polymer XXVIII, where Ar = phenylene, R = H and $M^{z+} = Cu^{2+}$. A pressed pellet of the vacuum-dried material is black and has an n-type conductivity of $10^{-8}$ S/cm.

Exemplary embodiment 4.

Preparation of an n-type conductive polymer XXX.

A mixture of 3 mmol terthiophene and 3 mmol quadratic acid (3,4-dihydroxy-3-cyclobutene-1,2-dione), 250 ml methylene chloride and $H_2SO_4$ is refluxed for 20 hours, while azeotropically removing water. After cooling, the mixture is filtered off by suction, after which the solid is washed with toluene and dried at 90°C under a reduced pressure of 100 mbar. The alternating copolymer of terthiophene and quadratic acid thus obtained is dispersed in an aqueous solution of 10 g/l sodium sulphite. After stirring at room temperature for 3 hours, the reduced polymer is sucked off, rinsed with, in succession, water and methanol and subsequently dried at 100°C and a pressure of 100 mbar for 1 hour. The polymer has a structure as shown in formula XXX of Fig. 9. In air, this polymer is pressed into rods (20 x 5 x 0.5 $cm^3$). The specific conductivity is determined by a four-point probe resistance measurement on these rods. Said conductivity, which is of the n-type, amounts to $10^{-3}$ S/cm and exhibits an initially rapid decrease by one order of magnitude, followed by a slow further decrease to $10^{-5}$ S/cm after 2 hours. The conductivity of the polymer in moist air then remains constant for many days.

Exemplary embodiment 5.

Preparation of the n-type conductive polymer XXXIII.

A quantity of 8 g (20 mmol) of the tetraethylester of 1,2,4,5-benzenetetracarboxylic acid (supplied by Aldrich) is added over a period of 1 hour to an efficiently stirred suspension of sodium dimethylsulfoxide anion (prepared by adding 15 g sodium hydride as a 80% dispersion in mineral oil to 250 ml dry dimethylsulfoxide under a nitrogen blanket). During this period the temperature of the mixture rises to 40-45°C. The mixture is stirred at ambient temperature for a period of 16 hours, after which the bulk of the solvent is removed by slow distillation in vacuum, using an oil bath at 60-75°C. A brick-red precipitate of the di-anion of the sulfoxide ninhydrin precursor is obtained. The latter is stirred together with 100 ml ether and 350 ml water until all solids are dissolved. The red aqueous layer is separated and acidified slowly with concentrated hydrochloric acid, while keeping the temperature of the stirred mixture below 10°C by cooling in an ice bath and adding crushed ice. A yellow precipitate of the bifunctional sulfoxide ninhydrin precursor is filtered and washed with water. Recrystallization from hexane/methylene chloride provides the pure precursor monomer XXXI (Fig. 10) in 20-30% yield as a slightly yellow stable solid identified by H-NMR spectroscopy in $CDCl_3$. A quantity of 600 mg of this monomer XXXI is heated and stirred together with 500 mg glycine in ethanol at reflux temperature for 12-15 hours. After 1-2 hours a reddish-brown precipitate starts to form which is provided on a glass frit after the completion of the process. The yield of the polymer XXXII (Fig. 10) is quantitative. The polymer can be classified as

poly-(Ruhemann's purple).

Polymer XXXII is stirred with one equivalent of CsOH in water at room temperature for a period of 12 hours. The homogeneous solution is poured into a small Petri dish and the solvent is allowed to evaporate slowly in ambient air. A bluish-black shiny brittle film is obtained having the anionic form of the polymeric dye. The polymer is represented by formula XXXIII (Fig. 10). Four-point probe measurements carried out on said polymer show that the conductivity is $10^{-3}$ S/cm and that the polymer is n-type conductive. The method in accordance with the invention enables n-type conductive polymers to be prepared which remain stable in moist air for many days.

## Claims

1. An n-type conductive polymer comprising a poly-conjugated chain of negatively charged active units as well as positively charged counterions, characterized in that the active units comprise at least one electron-accepting substituent which is selected from the group consisting of the substituents $-O^-$, $-S^-$,

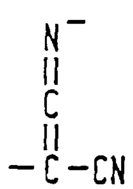

II

and $-N=C=N^-$

III

and in that the active units alternate with neutral connecting units in the chain.

2. An n-type conductive polymer as claimed in Claim 1, characterized in that the active unit comprises at least one $-O^-$ substituent.

3. An n-type conductive polymer as claimed in Claim 2, characterized in that the active unit is selected from the group consisting of

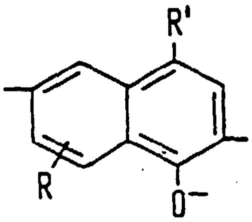
IV

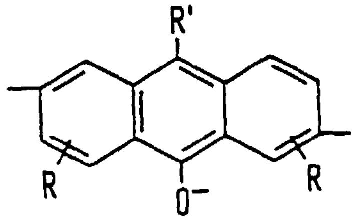
V

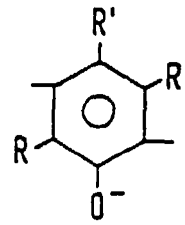
VI

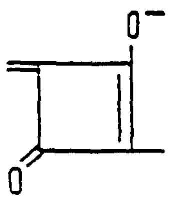
VII

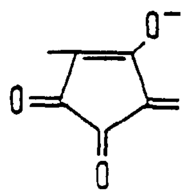
VIII

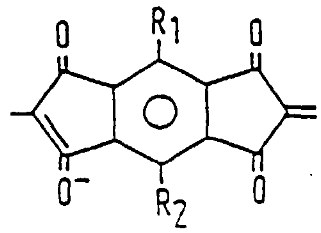
IX

wherein R, $R_1$ and $R_2$ represent a H-atom, a $C_1$-$C_{18}$ alkyl group, a $C_1$-$C_{18}$ alkoxy group, a $C_1$-$C_{18}$ thioalkoxy group or an aryl group or combinations of these groups, which groups may or may not be branched and R' represents an $-O^-$ group or R.

**4.** An n-type conductive polymer as claimed in Claim 3 having the following repeating unit

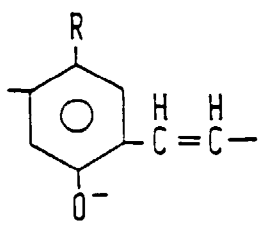
XX

wherein R is a H-atom, a $C_1$-$C_{18}$ alkyl group, a $C_2$-$C_{18}$ alkoxy group, a $C_1$-$C_{18}$ thioalkoxy group or an aryl group or a combination of these groups, which groups may or may not be branched.

**5.** An n-type conductive polymer as claimed in Claim 1, characterized in that the positively charged counterions are cations which are selected from the group formed by $Li^+$, $Na^+$, $K^+$, $Cs^+$, $NH_4^+$ and quaternary organic $N^+$ ions.

**6.** An n-type conductive polymer as claimed in Claim 1, characterized in that the counterions are complexed with a crown ether or cryptand.

**7.** A method of preparing an n-type conductive polymer as claimed in Claim 2, characterized in that a polymeric compound comprising dialkoxyphenylene units is treated with a dealkylation agent, causing the dialkoxyphenylene units to be converted into the corresponding dihydroxyphenylene units, after which the dihydroxyphenylene units are converted into bisphenolate anion units by means of a strong base, said bisphenolate anion units forming the active units of the n-type conductive polymer.

**8.** A method of preparing an n-type conductive polymer as claimed in Claim 4, characterized in that a polymeric compound comprising monomethoxyphenylene units is demethylated with Li-diphenylphosphide or K-diphenylphosphide, causing the monomethoxyphenylene units to be converted into the corresponding monohydroxyphenylene units, after which the monohydroxyphenylene units are converted into monophenolate anion units by means of a strong base, said monophenolate anion units forming the active units of the n-type conductive polymer.

**9.** A method of preparing an n-type conductive polymer as claimed in Claim 2, characterized in that a polymeric

compound comprising 1,2- or 1,3-diketones and aryl units is treated with a solution of a salt of a 1-, 2- or 3-valent metal, thereby forming the n-type conductive polymer, the salt used originating from a weaker acid than diketone.

**10.** The use of an n-type conductive polymer as claimed in any one of the Claims 1 to 6, as n-type semiconductive material in a semiconductor device.

**Patentansprüche**

**1.** Ein n-leitendes Polymer, das eine poly-konjugierte Kette negativ geladener aktiver Einheiten aufweist, sowie positiv geladene Gegenionen, dadurch gekennzeichnet, dass die aktiven Einheiten mindestens einen Elektronen akzeptierenden Substituenten aufweisen, gewählt aus der Gruppe, bestehend aus den Substituenten

$-O^-$, $-S^-$

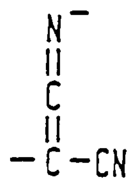

II

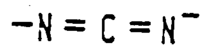

III

und dass die aktiven Einheiten wechselweise mit neutralen Verbindungseinheiten in der Kette auftreten.

**2.** Ein n-leitendes Polymer nach Anspruch 1, dadurch gekennzeichnet, dass die aktive Einheit wenigstens einen -O—Substituenten aufweist.

**3.** Ein n-leitendes Polymer nach Anspruch 2, dadurch gekennzeichnet, dass die aktive Einheit aus der Gruppe selektiert wird, die besteht aus:

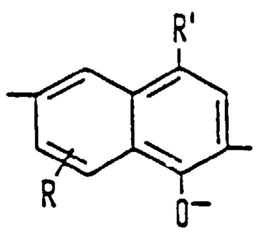

IV

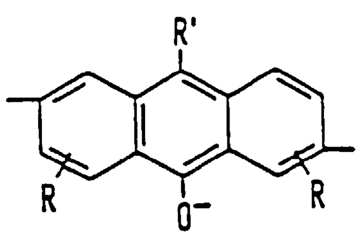

V

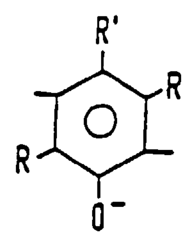

VI

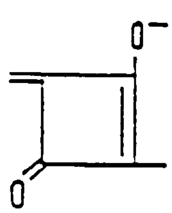

VII

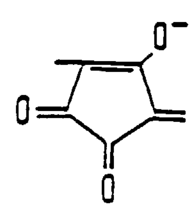

VIII

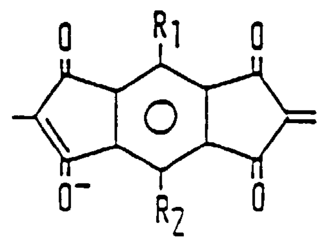

IX

wobei R, $R_1$ und $R_2$ ein H-Atom, eine $C_1$-$C_{18}$ Alkylgruppe, eine $C_1$-$C_{18}$-Alkoxygruppe, eine $C_1$-$C_{18}$-Thioalkoxygruppe oder eine Arylgruppe oder aber eine Kombination dieser Gruppen darstellt, wobei die Gruppen ggf. verzweigt sein können und R' eine -O—-Gruppe oder R darstellt.

4. Ein n-leitendes Polymer nach Anspruch 3 mit der nachfolgenden sich wiederholenden Einheit

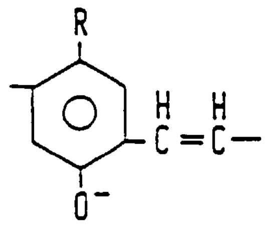

XX

wobei R ein H-Atom, eine $C_1$-$C_{18}$-Alkylgruppe eine $C_2$-$C_{18}$-Alkoxygruppe, eine $C_1$-$C_{18}$-Thioalkoxygruppe oder eine Arylgruppe oder eine Kombination dieser Gruppen ist, wobei diese Gruppen ggf verzweigt sein können.

5. Ein n-Leitendes Polymer nach Anspruch 1, dadurch gekennzeichnet, dass die positiv geladenen Gegenionen Kationen sind, die selektiert sind aus der Gruppe, bestehend aus $Li^+$, $Na^+$, $K^+$, $Cs^+$, $NH_4^+$ und quatemär organischen $N^+$-Ionen.

6. Ein n-leitendes Polymer nach Anspruch 1, dadurch gekennzeichnet, dass die Gegenionen mit einem Kronenäther oder einem Kryptanden komplexiert sind.

7. Verfahren zum Zubereiten eines n-leitenden Polymers nach Anspruch 2, dadurch gekennzeichnet, dass eine Polymerverbindung mit Dialkoxyphenylen mit einem Entalkylierungsmittel behandelt wird, wobei die Dialkoxyphenylen-Einheiten in die entsprechenden Dihydroxyphenylen-Einheiten umgewandelt werden, wonach diese letzteren Einheiten mit einer starken Base in Bisphenolatanion-Einheiten umgewandelt werden, welche die aktiven Einheiten des n-leitenden Polymers bilden.

8. Verfahren zum Zubereiten eines n-leitenden Polymers nach Anspruch 4, dadurch gekennzeichnet, dass eine Polymerverbindung mit Monomethoxyphenylen-Einheiten mit Li- Diphenylphosphid oder K-Diphenylphosphid entmethyliert wird, wobei die Monomethoxyphenylen-Einheiten in die entsprechenden Monohydroxyphenylen-Einheiten umgewandelt werden, wonach diese letzteren Einheiten mit einer starken Base in Monophenolatanion-Einheiten umgewandelt werden, welche die aktiven Einheiten des n-leitenden Polymers bilden.

9. Verfahren zum Zubereiten eines n-leitenden Polymers nach Anspruch 2, dadurch gekennzeichnet, dass eine Polymerverbindung mit 1,2- oder 1,3-Diketonen und Aryl-Einheiten wird unter Bildung des n-leitenden Polymers mit einer Lösung eines Salzes eines 1-, 2- oder 3-wertigen Metalls behandelt, wobei das Salz von einer schwächeren Säure als das Diketon herrührt.

10. Der Gebrauch eines n-leitenden Polymers nach einem der Ansprüche 1 bis 6 als n-halbleitendes Material in einer Halbleiteranordnung.

## Revendications

1. Polymère conducteur du type n comportant une chaîne polyconjuguée d'unités actives négativement chargées aussi bien que des contre-ions positivement chargés, caractérisé en ce que les unités actives comportent au moins un substituant accepteur d'électrons qui est choisi parmi le groupe constitué de substituants $-O^-$, $-S^-$,

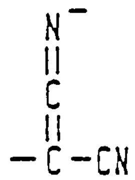 et 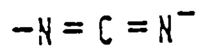

II III

et en ce que les unités actives alternent avec des unités de connexion neutres présentes dans la chaîne.

**2.** Polymère conducteur du type n selon la revendication 1, caractérisé en ce que l'unité active comporte au moins un substituant $-O^-$.

**3.** Polymère conducteur du type n selon la revendication 2, caractérisé en ce que l'unité active est choisie parmi le groupe constitué de

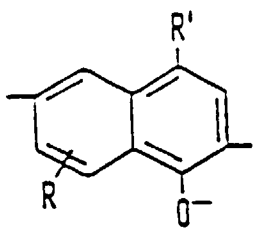

IV

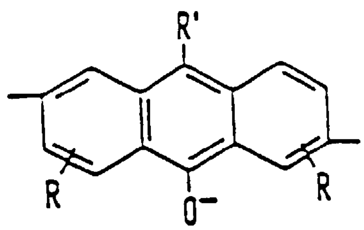

V

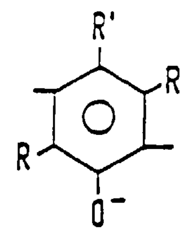

VI

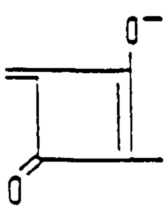

VII

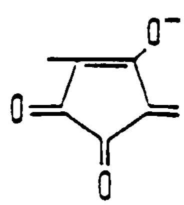

VIII

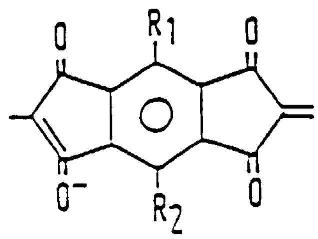

IX

où R, $R_1$ et $R_2$ représentent un atome H, un groupe d'alcoyle $C_1$-$C_{18}$, un groupe d'alcoxy $C_1$-$C_{18}$, un groupe de thioalcoxy $C_1$-$C_{18}$ ou un groupe d'aryle ou des combinaisons de ces groupes, lesdits groupes pouvant ou ne pouvant pas être ramifiés et R' représentant un groupe $-O^-$ ou R.

**4.** Polymère conducteur du type n selon la revendication 3 présentant l'unité de répétition suivante

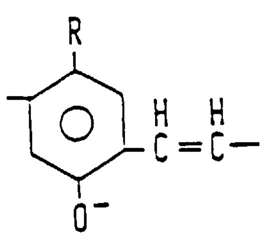 XX

où R est un atome H, un groupe d'alcoyle $C_1$-$C_{18}$, un groupe d'alcoxy $C_2$-$C_{18}$, un groupe de thioalcoxy $C_1$-$C_{18}$ ou

un groupe d'aryle ou une combinaison de ces groupes, lesdits groupes pouvant ou ne pouvant pas être ramifiés.

5. Polymère conducteur du type n selon la revendication 1, caractérisé en ce que les contre-ions positivement chargés sont des cations qui sont choisis parmi le groupe formé par $Li^+$ , $Na^+$ , $K^+$, $Cs^+$, $NH_4^+$ et des ions organiques quaternaires $N^+$.

6. Polymère conducteur du type n selon la revendication 1, caractérisé en ce que les contre-ions sont complexés avec un éther crown ou un cryptand.

7. Procédé pour préparer un polymère conducteur du type n selon la revendication 2, caractérisé en ce qu'un composé polymère comportant des unités de dialcoxyphénylène est traité avec un agent de déalcoylation, ce qui provoque la conversion des unités de dialcoxyphénylène en unités de dihydroxyphénylène correspondantes, après quoi les unités de dihydroxyphénylène sont converties en des unités d'anion de bisphénolate à l'aide d'une base forte, lesdites unités d'anion de bisphénolate constituant les unités actives du polymère conducteur du type n.

8. Procédé pour préparer un polymère conducteur du type n selon la revendication 4, caractérisé en ce qu'un composé polymère comportant des unités de monométhoxyphénylène est déméthylé avec du diphénylphosphure de Li ou du diphénylphosphure de K, ce qui provoque la conversion des unités de monométhoxyphénylène en unités de monohydroxyphénylène correspondantes, après quoi les unités de monohydroxyphénylène sont converties en des unités d'anion de monophénolate à l'aide d'une base forte, lesdites unités d'anion de monophénolate constituant les unités actives du polymère conducteur du type n.

9. Procédé pour préparer un polymère conducteur du type n selon la revendication 2, caractérisé en ce qu'un composé polymère comportant des 1,2 ou 1,3-dicétones et des unités d'aryle est traité avec une solution d'un sel constitué d'un métal monovalent, bivalent ou trivalent, de ce fait constituant le polymère conducteur du type n, le sel utilisé provenant d'un acide plus faible que la dicétone.

10. Utilisation d'un polymère conducteur du type n selon l'une quelconque des revendications précédentes 1 à 6 comme matériau semi-conducteur du type n dans un dispositif semi-conducteur.

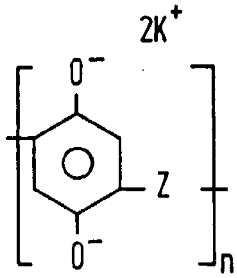

I

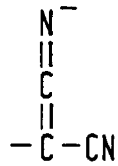

II

$-N=C=N^-$

III

FIG.1

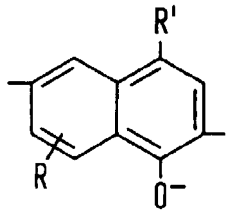

IV

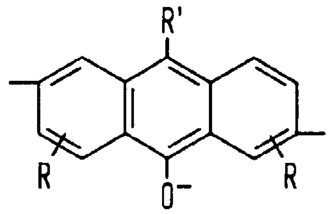

V

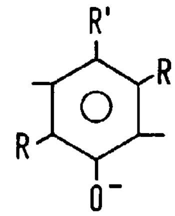

VI

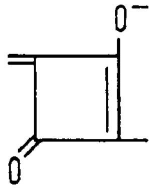

VII

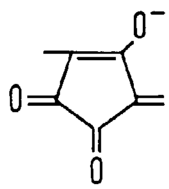

VIII

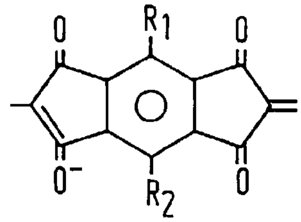

IX

FIG.2

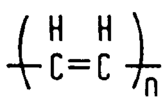

X

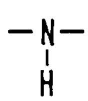

XI

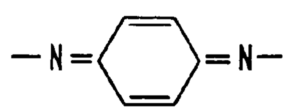

XII

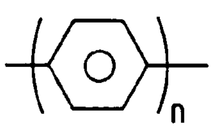

XIII

$-N=$

XIV

$-S-$

XV

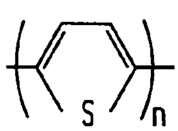

XVI

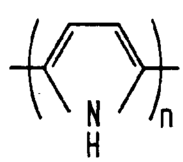

XVII

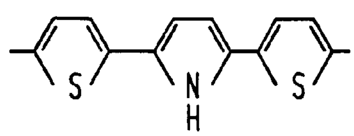

XVIII

FIG.3

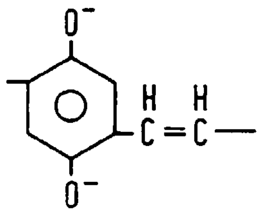

XIX

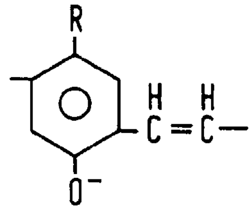

XX

FIG.4

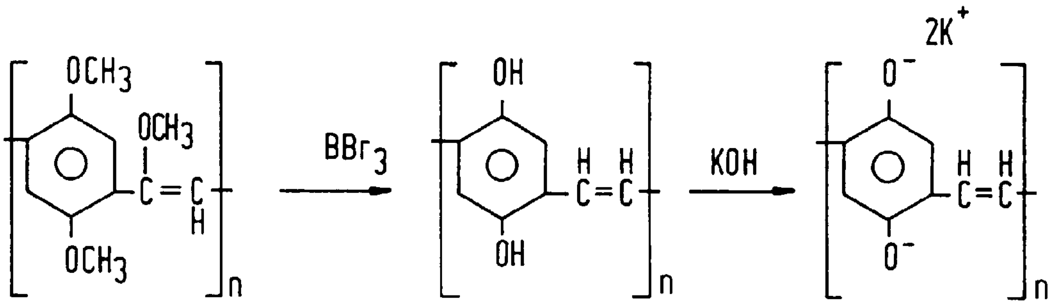


XXI XXII XXIII

FIG.5

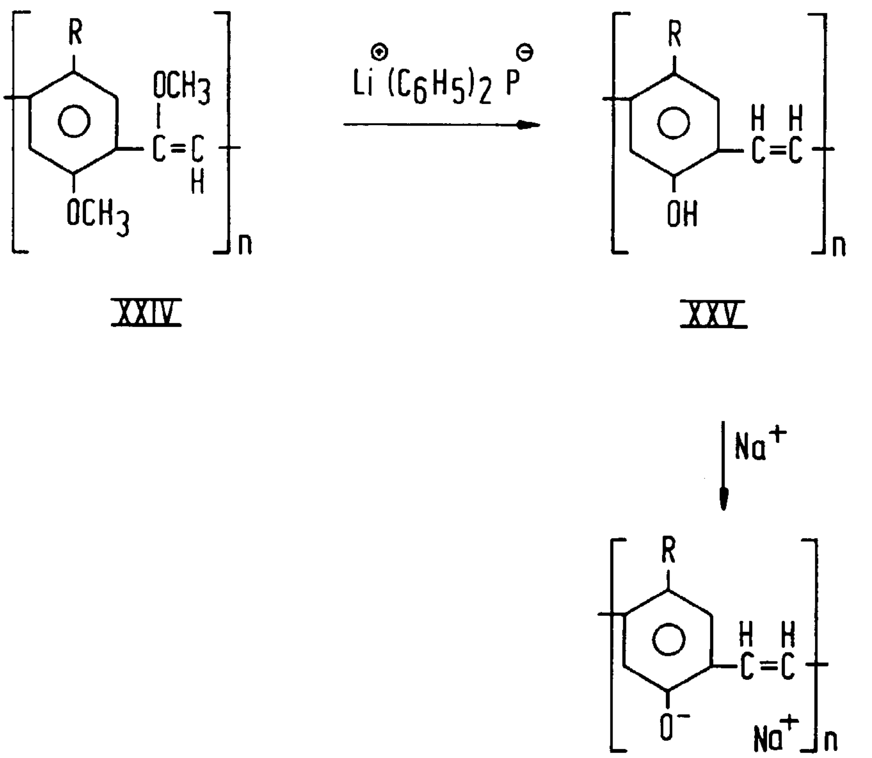


XXIV XXV

FIG.6

XXVI

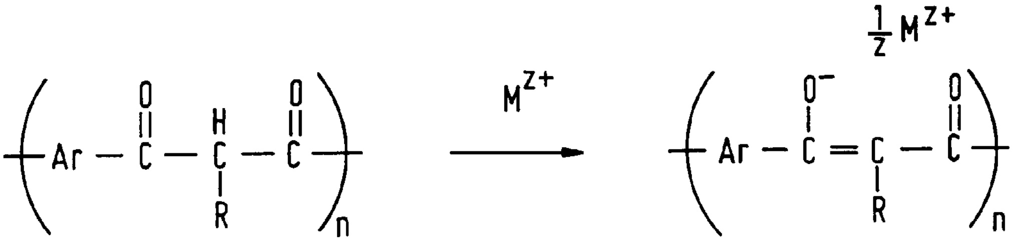


XXVII

FIG.7

XXVIII

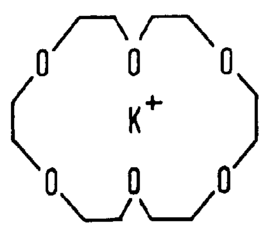

FIG.8

XXIX

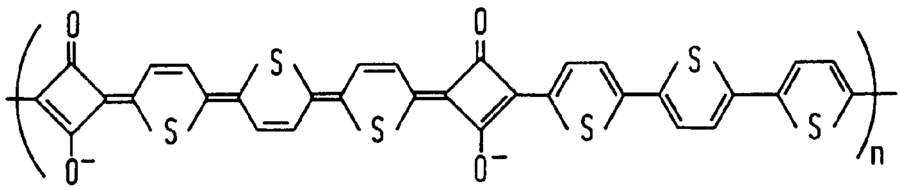

XXX

FIG.9

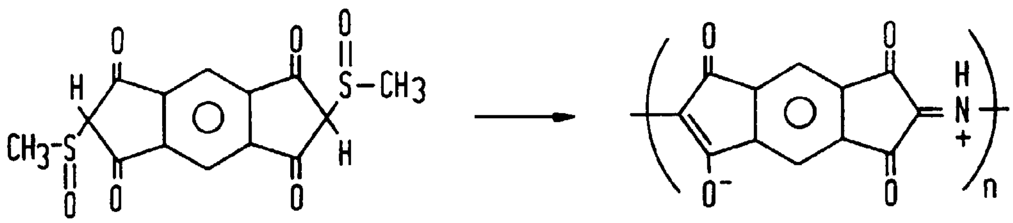

XXXI

XXXII

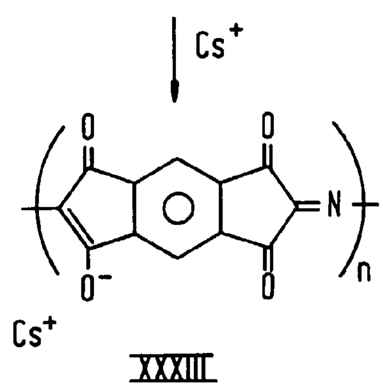


FIG.10

XXXIII